# EUROPÄISCHE PATENTSCHRIFT

(11) **EP 3 370 930 B1**
(45) Veröffentlichungstag und Bekanntmachung des Hinweises auf die Patenterteilung: **07.10.2020**
(21) Anmeldenummer: 16785518.8
(22) Anmeldetag: 26.10.2016
(51) Int. Cl.: B26B 21/60, B26B 21/40

(54) **KLINGENSCHUTZ FÜR RASIERKLINGEN AUS AUSHÄRTENDEM KLEBSTOFF**
BLADE GUARD FOR RAZOR BLADES MADE OF CURABLE ADHESIVE
PROTÈGE-LAMES POUR LAMES DE RASOIR CONSTITUÉ D'UN ADHÉSIF DURCISSABLE

(30) Priorität: 05.11.2015 DE 102015118959
(43) Veröffentlichungstag der Anmeldung: 12.09.2018
(73) Patentinhaber: eLED Revolution GmbH, 67126 Hochdorf-Assenheim (DE)
(72) Erfinder: HEDDERICH, Philipp, 67126 Hochdorf-Assenheim (DE); ORTH, Uwe, 67126 Hochdorf-Assenheim (DE)
(74) Vertreter: Patentanwälte Dr. Keller, Schwertfeger Partnerschaft mbB
(86) Internationale Anmeldenummer: PCT/EP2016/075745
(87) Internationale Veröffentlichungsnummer: WO 2017/076709

(56) Entgegenhaltungen:
- DE-A1- 1 428 608
- DE-A1- 1 553 758
- DE-A1- 3 049 479
- US-A1- 2009 235 529

## Beschreibung

### Technisches Gebiet:

Die vorliegende Erfindung betrifft die Verwendung eines aushärtenden Klebstoffs als Klingenschutz für Rasierklingen von Rasiersystemen.

### Stand der Technik:

Rasierapparate, beispielsweise Rasiersysteme für die Nassrasur, bestehen aus einer oder mehreren Rasierklingen, die von einem Rasierklingenhalter am Rasierkopf gehalten werden. Die DE 30 49 513 A1 beschreibt einen Aufbau eines solchen Klingenblocks. Der Rasierklingenhalter umfasst in der Regel ein Kunststoffformteil, in dem die Rasierklingen aufgenommen sind.

Zum Schutz der Rasierklingen und zur Vermeidung von Verletzungen werden diese häufig durch einen Klingenschutz geschützt. Der Klingenschutz umfasst beispielsweise eine Schutzkappe, die auf den Rasierklingenhalter aufgesteckt wird. Dadurch sind die Schneidkanten der Rasierklingen geschützt. Zur Benutzung wird die Kappe von dem Rasierklingenhalter abgenommen, wodurch der Rasierapparat gebrauchsfertig ist. Nach erfolgtem Gebrauch kann die Schutzkappe wieder auf den Rasierklingenhalter aufgesteckt werden.

Die DE 1 703 611 A beschreibt eine Rasierklinge mit einem Rasierklingenhalter aus Kunststoffformteilen, bei der vor der Schneidkante ein Schutzglied und hinter der Schneidkante eine Kappe ausgebildet ist. Die Rasierklinge weist zwei angeschärfte Schneidkanten auf, wobei das auf jeder Seite der Klinge aufgetragene Kunststoffmaterial so ausgestaltet ist, dass es für die eine Schneidkante ein Schutzglied und für die andere Schneidkante eine Kappe bildet, so dass die Schneidkanten an entgegengesetzten Seiten des Kopfes frei liegen.

Die DE 1 909 989 A beschreibt eine Schneidklinge, die mit einem dauerhaften Klingenschutz versehen ist. Der Klingenschutz besteht aus einem Faden, aus einem beliebigen Material, das biegsam ist und sich an die Form der Klinge anpasst. Der Faden kann beispielsweise mit einem Epoxidharzklebstoff an der Klinge befestigt werden. Eine vollständige Bedeckung der Klinge mit dem Klebstoff ist nicht vorgesehen.

Die EP 1 506 074 B1 beschreibt ein Rasiersystem, bei dem die Klinge fest in einem Gehäuse als Rasierklingenhalter untergebracht ist. Ein dauerhafter Klingenschutz ist jedoch auch hier nicht vorgesehen. Ähnliche Systeme sind auch bereits in der EP 1 073 545 B1 und der EP 1 188 526 B1 beschrieben.

Die US 2013/0014395 A1 beschreibt eine mehrfach beschichtete Rasierklinge, deren Beschichtung sich aus einer Klebeschicht, einer Haftbeschichtung und einer Deckschicht zusammensetzt. Gegebenenfalls ist auch noch eine weitere Schmierbeschichtung vorgesehen, um die Reibung des Rasierklingensystems zu verringern. Eine vollständige Einbettung der äußeren Schneidkanten in einen Klebstoff, wie auch die Verwendung von optisch transparentem Klebstoff sind jedoch nicht vorgesehen.

Die DE 15 53 758 A1 betrifft eine Verwendung eines aushärtenden Klebstoffs (Polytetrafluorethylen-Harz), bei dem der aushärtende Klebstoff durch Tauchen, Besprühen oder Anstreichen über die Rasierklingen aufgebracht ist.

Die DE 30 49 479 A1 betrifft eine Rasierklinge, bei der die gesamte Klinge oder lediglich der zur Schneidkante benachbarte Bereich mit einem Überzug aus Polyethylenoxid beschichtet ist. Die Beschichtung dient insbesondere als Gleitmittel für den Rasiervorgang.

Die DE 14 28 608 A1 betrifft eine Rasierklinge, die mindestens in der Nähe der Schneidkante einen Überzug aus einem Material aufweist, welches ein sanfteres Rasieren ermöglicht, wobei der Überzug aus einem vollständig ausgehärteten Kunststoff der PTFE-Gruppe besteht.

Die US 2009/0235529 A1 betrifft ein Haarschneidegerät mit einer Klingenhalterung und einem integral mit der Klingenhalterung verbundenen und abnehmbaren Klingenschutz.

In Kaufhäusern werden häufig Testexemplare solcher Rasierklingen oder ganzer Rasiersysteme als Muster zur Schau gestellt, um den Kunden einen Eindruck von dem Produkt zu vermitteln. Zum Schutz vor unbeabsichtigten Verletzungen werden solche Testexemplare bislang mit einer Schutzkappe aus Plastik abgedeckt, welche wiederum fest mit dem Rasierklingenhalter verbunden werden. Diese Maßnahme ist recht aufwändig. Ferner ist durch eine solche Abdeckung die Aufmachung der Rasierklinge nur noch schwer zu erkennen, was ebenfalls unbefriedigend ist.

### Darstellung der Erfindung:

Vor diesem Hintergrund ist es Aufgabe der vorliegenden Erfindung, einen Klingenschutz für Rasierklingen von Rasiersystemen bereitzustellen, der dauerhaft die Schneidkanten der Rasierklingen vollständig einbettet, so dass diese für ein Testsystem oder Testmuster geeignet sind, ohne dass durch ein solches Muster eine Verletzungsgefahr für mögliche Testkandidaten oder Kunden ausgeht.

Diese Aufgabe wird gelöst durch die Verwendung eines optisch transparenten aushärtenden Klebstoffes als Klingenschutz für Rasierklingen von Rasiersystemen mit den Merkmalen des Anspruchs 1.

Erfindungsgemäß wird als Klingenschutz für Rasierklingen von Rasiersystemen ein ausgehärteter Klebstoff verwendet, der ein- oder mehrschichtig über den Rasierklingen und/oder dem Rasierklingenhalter aufgebracht ist. Der Klebstoff soll vollflächig über den Schneidkanten und/oder dem Rasierklingenhalter aufgebracht werden. Vorzugsweise handelt es sich bei dem Rasierklingenhalter um ein Kunststoffformteil, in dem ein oder mehrere Rasierklingen aufgenommen sind. Vorzugsweise wird der Klebstoff in einem ersten Verfahrensschritt in Längserstreckung zu den Schneidkanten der Rasierklingen aufgetragen. Der Auftrag kann in einer oder mehreren Schichten erfolgen. In einer bevorzugten Variante ist vorgesehen, dass zunächst die Zwischenräume zwischen den einzelnen Rasierklingen bzw. die Zwischenräume zwischen den Schneidkanten mit dem Klebstoff gefüllt werden. In einem weiteren Schritt wird dann die Oberfläche veredelt, indem diese beispielsweise verglättet wird. Die Schneidkanten der Rasierklingen sind vollständig in dem Klebstoff eingebettet. Bei den Klebstoffen handelt es sich um einen optisch transparenten, aushärtenden Klebstoff, bei dem die Rasierklingen für den Betrachter möglichst ohne Beeinträchtigung optisch wahrnehmbar bleiben.

Im Vergleich zu einer herkömmlichen Schutzkappe hat ein aushärtender Klebstoff den Vorteil, dass dieser mit hoher Haftwirkung auftragbar ist. Ferner bleiben die in dem Klebstoff eingebetteten Rasierklingen des Rasierkopfes für den Betrachter sichtbar und der Klebstoff ist nach der Aushärtung ausreichend fest, um eine Abtragung von den Rasierklingen zu vermeiden. Somit vereint die Verwendung eines aushärtenden Klebstoffs als Klingenschutz für Rasierklingen den Aspekt der Sicherheit, indem mögliche Schnittverletzungen an den scharfen Schneidkanten der Klingen beim Umgang mit einem Testmuster oder bei einer Begutachtung eines Testmusters verhindert werden, mit dem Aspekt der optischen Präsentation, bei der keine oder nur eine sehr geringe optische Beeinträchtigungen der in dem Klebstoff eingebetteten Klingen durch das transparente Klebstoffmaterial gegeben sind.

In einer bevorzugten Variante kann vorgesehen sein, dass nach Auftrag des Klebstoffes die Oberfläche egalisiert wird, beispielsweise durch Abschleifen von Klebstoffmaterial. Dadurch wird eine weitgehend glatte Oberfläche und transparente, optische Wirkung des Klingenschutzes erreicht.

In einer bevorzugten Variante werden die Rasierklingen vor Auftrag des aushärtenden Klebstoffes abgestumpft. Dies kann beispielsweise durch Abschleifen der Klingenoberfläche erfolgen. Durch diese Maßnahme vergrößert sich die Oberfläche der Schneideflächen und die Oberflächenstruktur wird rauer. Hierdurch kann eine höhere Adhäsionskraft zwischen Klebstoff und Klingenoberfläche erreicht werden, was zu einer verstärkten Haftwirkung des Klebstoffs führt. Außerdem bietet dieses Abschleifen den zusätzlichen Nutzen, dass im Falle des unbeabsichtigten Ablösens des Klingenschutzes, z.B. bei einer unsachgemäßen Vorführung des Testsystems, immer noch ein gewisser Schutz der Testperson vor Verletzungen besteht.

Bei dem aushärtenden Klebstoff handelt es sich vorzugweise um einen Polymerisationsklebstoff, einen Polykondensationsklebstoff und/oder einen Polyadditionsklebstoff. Vorzugsweise erreicht der ausgehärtete Klebstoff eine Festigkeit, die nicht ohne weiteres vom Rasierklingenhalter oder den Rasierklingen entfernbar ist.

Bevorzugte härtende Polymerisationsklebstoffe sind beispielsweise Methylacrylatklebstoffe, anaerob härtende Klebstoffe, ungesättigte Polyester oder strahlenhärtende Klebstoffe.

Daneben können auch Schmelzklebstoffe oder auf Wasser basierende Klebstoffe eingesetzt werden, sofern sie den erforderlichen Aushärtungsgrad aufweisen. Bevorzugte Polykondensationsklebstoffe sind beispielsweise Phenylformaldehydharzklebstoffe, Silikonklebstoffe, Silan-vernetzende Polymerklebstoffe, Polyamidklebstoffe oder Polysulfitklebstoffe. Bevorzugte Polyadditionsklebstoffe sind beispielsweise Epoxidharzklebstoffe, Polyurethanklebstoffe oder Silikone. Daneben sind auch Kunstharze oder Naturharze als aushärtender Klebstoff von der vorliegenden Erfindung umfasst. Dazu gehören beispielsweise Phenoplaste wie PF-Harze oder Phenolformaldehydharze. Ferner sind auch Aminoplaste wie Harnstoffformaldehyd, Melaminformaldehydharze oder Epoxidharze einsetzbar.

Vorzugsweise wird der aushärtende Klebstoff ausgewählt aus der Gruppe bestehend aus Harzklebstoff, Kunstharz, Epoxidharzklebstoff, Schmelzklebstoff, UV-härtender Klebstoff, Strahlen- und lichthärtender Klebstoff, Polyurethanklebstoff, Silikonklebstoff, Acrylatklebstoff, 2-Komponentenklebstoff. Bevorzugt kommt ein Acrylglaskleber zum Einsatz.

Wie bereits einleitend erwähnt, soll der Rasierkopf mit den Rasierklingen und dem Rasierklingenhalter bei einer Begutachtung im Rahmen eines Testmusters oder eines Testsystems geschützt sein. Eine Ingebrauchnahme der Rasierklinge ist nicht vorgesehen. Vor diesem Hintergrund kann der aushärtende Klebstoff dauerhaft auf dem Rasiersystem verbleiben.

### Wege zur Ausführung der Erfindung und gewerbliche Verwertbarkeit:

Die vorliegende Erfindung wird im nachfolgenden Ausführungsbeispiel näher erläutert.

Beschrieben wird ein Verfahren zur Herstellung eines Klingenschutzes bei Rasierklingen von Rasiersystemen, bei dem ein Klebstoff ein- oder mehrschichtig über die Rasierklingen und/oder den Rasierklingenhalter aufgebracht und anschließend ausgehärtet wird. Vorzugsweise wird hierzu ein 2-Komponentenharz verwendet. Vorzugsweise kann die Rasierklingenoberfläche, beispielsweise durch Schleifen, abgestumpft werden. Dadurch wird zum einen die Haftwirkung des Klebstoffes gegenüber der Rasierklingenoberfläche erhöht, zum anderen wird durch diese Maßnahme jedoch auch verhindert, dass sich eine Testperson verletzt, falls der Klingenschutz sich aufgrund einer äußeren Einwirkung vom Rasierklingenhalter lösen sollte. Dies ist zu empfehlen, aber keinesfalls zwingend erforderlich für das im Folgenden beschriebene Verfahren. In einem ersten Schritt wird der Klebstoff zur Schließung der Zwischenräume der Rasierklingen auf die Oberfläche der Rasierklingen aufgetragen. In einem weiteren Schritt erfolgt ein weiterer Auftrag des Klebstoffs zur optischen Veredelung der Oberfläche. Angestrebt wird eine gleichmäßige, plane Oberfläche. Vorzugsweise wird der aufgetragene Klebstoff zwischen den beiden Verfahrensschritten aushärten gelassen. Vorzugsweise erfolgt die Aushärtung durch eine UV-Behandlung, was den Aushärtevorgang beschleunigt. Eine weitere UV-Behandlung erfolgt abschließend nach dem letzten Auftragungsvorgang. Vorzugsweise wird als Klingenschutz ein 2-Komponentenklebstoff eingesetzt, der optisch transparent ist. Lufthärtende Klebstoffe sind dabei ebenso bevorzugt wie strahlen- und lichthärtende Klebstoffe.

Die Verwendung eines aushärtenden Klebstoffes bietet den Vorteil, dass die Auftragung schnell und effizient erfolgen kann. Dabei werden die Schneidkanten der Rasierklingen effizient durch die Aufnahme in die Klebstoffmasse geschützt. Gleichzeitig bleibt der visuelle Eindruck der Rasierklingen mit dem Rasierklingenhalter oder dem Rasierkopf erhalten. Schließlich erübrigt sich auch der Einsatz einer Schutzkappe, was erhebliche Materialkosten spart. Zudem müssen die Schutzkappen auf dem Rasierkopf dauerhaft befestigt sein, um ein unbeabsichtigtes Abnehmen bei Testsystemen zu vermeiden. Diese Maßnahmen können zukünftig bei Verwendung eines aushärtenden Klebstoffs im Sinne der vorliegenden Erfindung unterbleiben, so dass die Kosten und der Aufwand für die Herstellung eines Klingenschutzes deutlich gesenkt werden.

## Patentansprüche

1. Verwendung eines aushärtenden Klebstoffs als Klingenschutz für Rasierklingen von Rasiersystemen, bei dem der aushärtende Klebstoff ein- oder mehrschichtig über die Rasierklingen und/oder dem Rasierklingenhalter aufgebracht ist, **dadurch gekennzeichnet, dass** die äußeren Schneidkanten der Rasierklingen vollständig in den Klebstoff eingebettet sind, so dass die Zwischenräume zwischen den Schneidkanten mit Klebstoff verschlossen sind, und dass es sich bei dem aushärtenden Klebstoff um einen optisch transparenten aushärtenden Klebstoff handelt.

2. Verwendung nach Anspruch 1, **dadurch gekennzeichnet, dass** es sich bei dem Klebstoff um einen Polymerisationsklebstoff, einen Polykondensationsklebstoff und/oder einen Polyadditionsklebstoff handelt.

3. Verwendung nach Anspruch 2, **dadurch gekennzeichnet, dass** der aushärtende Klebstoff ausgewählt ist aus der Gruppe bestehend aus Harzklebstoff, Kunstharz, Epoxidharzklebstoff, Schmelzklebstoff, UV-härtender Klebstoff, Strahlen- und lichthärtender Klebstoff, Polyurethanklebstoff, Silikonklebstoff, Acrylatklebstoff, 2-Komponentenklebstoff.

4. Verwendung nach einem der vorhergehenden Ansprüche, **dadurch gekennzeichnet, dass** es sich bei dem Rasiersystem um ein Muster oder Testsystem handelt.

5. Verfahren zur Herstellung eines Klingenschutzes bei Rasierklingen von Rasiersystemen, bei dem ein Klebstoff ein- oder mehrschichtig über die Längserstreckung der Rasierklingen und/oder dem Rasierklingenhalter aufgebracht und anschließend ausgehärtet wird, **dadurch gekennzeichnet, dass** die äußeren Schneidkanten der Rasierklingen vollständig in den Klebstoff eingebettet werden, so dass die Zwischenräume zwischen den Schneidkanten mit Klebstoff verschlossen sind, und dass als aushärtender Klebstoff ein optisch transparenter aushärtender Klebstoff eingesetzt wird.

6. Verfahren nach Anspruch 5, **dadurch gekennzeichnet, dass** in einem ersten Schritt die Rasierklingen vor Auftrag des Klebstoffes durch Abschleifen abgestumpft werden.

7. Verfahren nach Anspruch 5 und 6, **dadurch gekennzeichnet, dass** zunächst ein Auftrag des Klebstoffs zur Schließung der Zwischenräume zwischen den Rasierklingen und in einem weiteren Schritt eine optische Veredelung der Oberfläche erfolgt.

8. Verfahren nach Anspruch 7, **dadurch gekennzeichnet, dass** der Klebstoff zwischen den beiden Schritten ausgehärtet wird.

9. Verfahren nach einem der Ansprüche 5 bis 8, **dadurch gekennzeichnet, dass** ein 2-Komponentenharz als Klebstoff eingesetzt wird.

10. Verfahren nach einem der Ansprüche 5 bis 9, **dadurch gekennzeichnet, dass** die Oberfläche des Klingenschutzes egalisiert wird.

11. Klingenschutz für Rasierklingen von Rasiersystemen, bei dem der aushärtende Klebstoff ein- oder mehrschichtig über die Rasierklingen und/oder dem Rasierklingenhalter aufgebracht ist und der dauerhaft die Schneidkanten der Rasierklingen bedeckt, so dass diese für ein Testsystem oder Testmuster geeignet sind, **dadurch gekennzeichnet, dass** die äußeren Schneidkanten der Rasierklingen vollständig in den Klebstoff eingebettet sind, so dass die Zwischenräume zwischen den Schneidkanten mit Klebstoff verschlossen sind, und dass es sich bei dem aushärtenden Klebstoff um einen optisch transparenten aushärtenden Klebstoff handelt.

12. Klingenschutz nach Anspruch 11, **dadurch gekennzeichnet, dass** der aushärtende Klebstoff ausgewählt ist aus der Gruppe bestehend aus Harzklebstoff, Kunstharz, Epoxidharzklebstoff, Schmelzklebstoff, UV-härtender Klebstoff, Strahlen-und lichthärtender Klebstoff, Polyurethanklebstoff, Silikonklebstoff, Acrylatklebstoff, 2-Komponentenklebstoff.

13. Klingenschutz nach Anspruch 11, **dadurch gekennzeichnet, dass** der aushärtende Klebstoff ein Acrylglaskleber ist.

14. Klingenschutz nach Anspruch 11, **dadurch gekennzeichnet, dass** die Rasierklingen abgestumpft sind.

## Claims

1. A use of a curable adhesive as blade guard for razor blades of shaving systems, the curable adhesive being applied in single or multiple layers to the razor blades and/or the razor blade holder, **characterised in that** the external cutting edges of the razor blades are completely embedded in the adhesive so that the gaps between the cutting edges are sealed with adhesive and that the curable adhesive is an optically transparent curable adhesive.

2. The use according to claim 1, **characterized in that** the adhesive is a polymerization adhesive, a polycondensation adhesive and/or a polyaddition adhesive.

3. The use according to claim 2, **characterized in that** the curable adhesive is selected from the group consisting of resin adhesive, synthetic resin, epoxy resin adhesive, hot-melt adhesive, UV-curable adhesive, radiation-curable and light-curable adhesive, polyurethane adhesive, silicone adhesive, acrylate adhesive, two-component adhesive.

4. The use according to any of the preceding claims, **characterized in that** the shaving system is a sample or test system.

5. A method for producing a blade guard for razor blades of shaving systems, an adhesive is being applied in single or multiple layers to the longitudinal extent of the razor blades and/or the razor blade holder and subsequently being cured, **characterised in that** the external cutting edges of the razor blades are completely embedded in the adhesive so that the gaps between the cutting edges are sealed with adhesive and **in that** an optically transparent curable adhesive is used as the curable adhesive.

6. The method according to claim 5, **characterized in that**, as a first step, the razor blades are blunted by abrading before the adhesive is applied.

7. The method according to claim 5 and 6, **characterized in that** the adhesive is first applied in order to close the gaps between the razor blades and, as a further step, the surface is optically finished.

8. The method according to claim 7, **characterized in that** the adhesive is cured between the two steps.

9. The method according to anyone of claims 5 to 8, **characterized in that** a two-component resin is used as the adhesive.

10. The method according to one of claims 5 to 9, **characterized in that** the surface of the blade guard is levelled.

11. A blade guard for razor blades of shaving systems, the curable adhesive being applied in single or multiple layers to the razor blades and/or the razor blade holder and the blade guard durably covering the cutting edges of the razor blades such that said blades are suitable for a test system or test sample, **characterised in that** the external cutting edges of the razor blades are completely embedded in the adhesive so that the gaps between the cutting edges are sealed with adhesive and **in that** the curable adhesive is an optically transparent curable adhesive.

12. The blade guard according to claim 11, **characterized in that** the curable adhesive is selected from the group consisting of resin adhesive, synthetic resin, epoxy resin adhesive, hot-melt adhesive, UV-curable adhesive, radiation-curable and light-curable adhesive, polyurethane adhesive, silicone adhesive, acrylate adhesive, two-component adhesive.

13. The blade guard according to claim 11, **characterized in that** the curable adhesive is an acrylic glass adhesive.

14. The blade guard according to claim 11, **characterized in that** the razor blades are blunted.

## Revendications

1. Utilisation d'un adhésif durcissable en tant que protège-lames destiné à des lames de rasage de systèmes de rasage, dans laquelle ledit adhésif durcissable est déposé, en une ou plusieurs couche(s), sur lesdites lames de rasage et/ou sur le porte-lames de rasage, **caractérisée par le fait que** les tranchants extérieurs des lames de rasage sont intégralement noyés dans l'adhésif, de façon telle que les espaces interstitiels séparant lesdits tranchants soient obturés par de l'adhésif ; et **par le fait que** ledit adhésif durcissable se présente comme un adhésif durcissable optiquement transparent.

2. Utilisation selon la revendication 1, **caractérisée par le fait que** l'adhésif se présente comme un adhésif de polymérisation, un adhésif de polycondensation et/ou un adhésif de polyaddition.

3. Utilisation selon la revendication 2, **caractérisée par le fait que** l'adhésif durcissable est choisi au sein du groupe comprenant un adhésif résineux, une résine synthétique, un adhésif à base de résine époxyde, un adhésif thermofusible, un adhésif durcissant aux UV, un adhésif durcissant par rayonnement et à la lumière, un adhésif à base de polyuréthane, un adhésif à base de silicone, un adhésif à base d'acrylate, un adhésif à 2 composants.

4. Utilisation selon l'une des revendications précédentes, **caractérisée par le fait que** le système de rasage se présente comme un échantillon ou comme un système d'expérimentation.

5. Procédé de fabrication d'un protège-lames équipant des lames de rasage de systèmes de rasage, dans lequel un adhésif est déposé, en une ou plusieurs couche(s), sur l'étendue longitudinale desdites lames de rasage et/ou sur le porte-lames de rasage, et est durci dans l'enchaînement, **caractérisé par le fait que** les tranchants extérieurs des lames de rasage sont intégralement noyés dans l'adhésif, de façon telle que les espaces interstitiels séparant lesdits tranchants soient obturés par de l'adhésif ; et **par le fait qu'**un adhésif durcissable optiquement transparent est utilisé en tant qu'adhésif durcissable.

6. Procédé selon la revendication 5, **caractérisé par le fait que** les lames de rasage sont émoussées par meulage, lors d'une première étape, préalablement au dépôt de l'adhésif.

7. Procédé selon les revendications 5 et 6, **caractérisé par le fait qu'**il s'opère tout d'abord un dépôt de l'adhésif, en vue d'obturer les espaces interstitiels entre les lames de rasage, une mise en valeur optique de la surface ayant lieu lors d'une étape supplémentaire.

8. Procédé selon la revendication 7, **caractérisé par le fait que** l'adhésif est durci entre les deux étapes.

9. Procédé selon l'une des revendications 5 à 8, **caractérisé par le fait qu'**une résine à 2 composants est utilisée en tant qu'adhésif.

10. Procédé selon l'une des revendications 5 à 9, **caractérisé par le fait que** la surface du protège-lames est aplanie.

11. Protège-lames destiné à des lames de rasage de systèmes de rasage, dans lequel l'adhésif durcissable est déposé, en une ou plusieurs couche(s), sur lesdites lames de rasage et/ou sur le porte-lames de rasage, et recouvre durablement les tranchants desdites lames de rasage, de telle sorte que ces dernières soient appropriées pour un système expérimental ou pour un échantillon expérimental, **caractérisé par le fait que** les tranchants extérieurs des lames de rasage sont intégralement noyés dans l'adhésif, de façon telle que les espaces interstitiels séparant lesdits tranchants soient obturés par de l'adhésif ; et **par le fait que** l'adhésif durcissable se présente comme un adhésif durcissable optiquement transparent.

12. Protège-lames selon la revendication 11, **caractérisé par le fait que** l'adhésif durcissable est choisi au sein du groupe comprenant un adhésif résineux, une résine synthétique, un adhésif à base de résine époxyde, un adhésif thermofusible, un adhésif durcissant aux UV, un adhésif durcissant par rayonnement et à la lumière, un adhésif à base de polyuréthane, un adhésif à base de silicone, un adhésif à base d'acrylate, un adhésif à 2 composants.

13. Protège-lames selon la revendication 11, **caractérisé par le fait que** l'adhésif durcissable est une colle pour verre acrylique.

14. Protège-lames selon la revendication 11, **caractérisé par le fait que** les lames de rasage sont émoussées.
